# EUROPÄISCHE PATENTSCHRIFT

(11) **EP 1 405 027 B1**
(45) Veröffentlichungstag und Bekanntmachung des Hinweises auf die Patenterteilung: **20.04.2005**
(21) Anmeldenummer: 02754746.2
(22) Anmeldetag: 21.06.2002
(51) Int. Cl.: F41H 5/007, F41H 5/013, F41H 7/04

(54) **GESCHÜTZTES PERSONENFAHRZEUG ODER -AUFENTHALTSRAUM**
PROTECTED PASSENGER VEHICLE OR RECREATION ROOM
VEHICULE DE TRANSPORT DE PERSONNES PROTEGE OU ESPACE DE SEJOUR DE PERSONNES PROTEGE

(30) Priorität: 30.06.2001 DE 20110874 U; 13.07.2001 DE 20111680 U; 15.09.2001 DE 20115264 U; 19.12.2001 DE 20120560 U; 20.02.2002 DE 20202604 U
(43) Veröffentlichungstag der Anmeldung: 07.04.2004
(73) Patentinhaber: Drehtainer Technologie Transfer GmbH, 25469 Halstenbek (DE)
(72) Erfinder: MEYER, Helmut, 25469 Halstenbek (DE)
(74) Vertreter: Glaeser, Joachim, Dipl.-Ing.
(86) Internationale Anmeldenummer: PCT/EP2002/006938
(87) Internationale Veröffentlichungsnummer: WO 2003/004958

(56) Entgegenhaltungen:
- EP-A- 0 828 134
- DE-A- 19 913 845
- DE-C- 19 702 398
- US-H- H1 833

## Beschreibung

Die Erfindung bezieht sich auf ein mit Sitzgelegenheiten ausgestattetes Militärpersonenfahrzeug oder -aufenthaltsraum in der Form eines Frachtcontainers für den Einsatz in Gebieten, in denen Minen oder dgl. zu befürchten sind, wobei Wände, Boden und Decke mit Mitteln ausgestattet sind, die der Druckwelle einer Detonation durch Formänderungsarbeit Energie entziehen.

Beim Personentransport in Gebieten, in denen Sprengminen zu befürchten sind, werden gegenüber Druckwellen geschützte Container als gepanzerte Fahrzeuge eingesetzt (DE 198 42 629 C1), wenngleich sich diese nicht ausreichend bewährt haben, und zwar auch, wenn sie mit Wand-, Boden- und Deckenauskleidungen ausgebildet sind, die sich unter Druckeinwirkung verformen und so einer Druckwelle den größten Teil ihrer Energie nehmen. Bei einem derartig ausgestatteten Fahrzeug ist nicht zu verhindern, dass durch eine Mine eine derartig starke Druckwelle erzeugt wird, dass deren Kräfte unterhalb des Sitzes angreifen und den Sitz mit der darauf befindlichen Person so beschleunigen können, dass die Person ernsthaft verletzt wird.

Die Erfindung will hier Abhilfe schaffen, was durch ein Fahrzeug bzw. einen Aufenthaltsraum der eingangs genannten Art dadurch erreicht wird, dass mehrteilige Stütz- und/oder Hängevorrichtungen für die Aufstellteile der Sitzgelegenheiten vorgesehen sind, dass zwischen einem auf dem Boden des Containers aufruhenden Fuß oder Stuhlbein und dem am Sitz befestigten Teil und/oder einer an der oder einer Wand befestigten Teil mindestens eine Sollbruchstelle, eine Abrissverbindung oder ein Abrissbolzen vorgesehen ist, die/der bereits auf die Ausbildung der Druckwelle der Detonation anspricht und die Verbindung beider Teile löst.

Vorangehend ist die vorliegende Erfindung beschrieben worden, wenn es beispielsweise um die geschützte Anordnung eines Sitzes für eine Person in einem transportablen Container geht. Das Prinzip der vorliegenden Erfindung kann ebensogut auf andere Gegenstände in einem solchen Container angewendet werden. Beispielsweise könnte es sich um einen Arbeitstisch handeln, der auf einem Bein oder mehreren Beinen auf dem Fußboden aufruht und ebenfalls mit Sollbruchstellen ausgestattet ist. Desgleichen können irgendwelche Gerätschaften auf diese Art und Weise geschützt werden, die beispielsweise an der Wand befestigt werden. In gleicher Weise können Gegenstände mit Hilfe der vorliegenden Erfindung gegenüber Druckwellen geschützt werden, wenn sie an der Decke aufgehängt werden, insbesonere kann der Boden, auf dem die Sitze aufruhen, derarig an der Decke aufgehängt werden.

Das Prinzip der vorliegenden Erfindung lässt sich in gleicher Weise auch dann erfolgreich einsetzen, wenn der Container bereits ortsfest gemacht worden ist und von oben her eine Druckwelle auf ihn einwirkt. Voraussetzung für den Schutz ist lediglich die entsprechende Ausgestaltung der Decke mit solchen Mitteln, die Energie einer Druckwelle aufnehmen können.

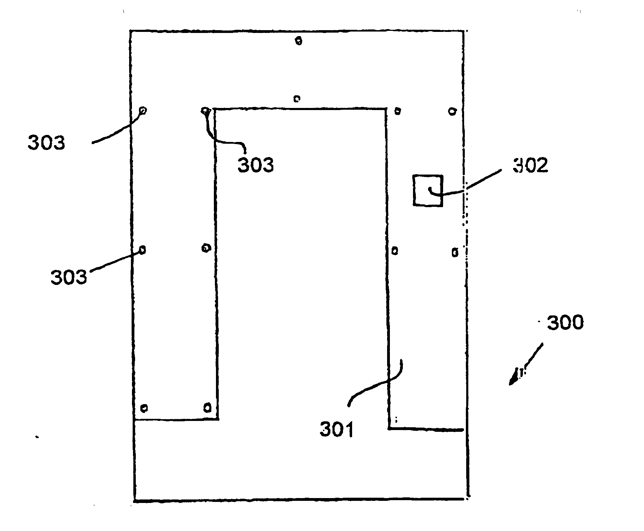

Die Erfindung wird nachstehend anhand der Zeichnung beispielsweise erläutert.

Die einzige Fig zeigt eine Draufsicht auf die Bodenfläche eines Militärfahrzeuges einer Ausführungsform der Erfindung.

Die Fig. zeigt eine schematische Draufsicht auf den Innenraum eines Containers 300. In diesem Innenraum ist ein Sitzbereich in der Form eines U ausgestaltet, und auf diese Bodenfläche 301 sind Sitze 302 für die Passagiere aufgestellt. In der Zeichnung ist lediglich ein sitz 302 wiedergegeben worden. Der Bereich außerhalb der Aufstellfläche 301 ist derjenige Bereich, in dem sich die Passagiere bewegen können, ansonsten sitzen sie auf den Sitzen 302.

Die Aufstellfläche 301 befindet sich in einem gewissen Abstand oberhalb des Bodens des Containers 300. Die Aufstellfläche 301 nimmt diese Lage deshalb ein, weil sie in einer Vielzahl von Seilen oder Ketten 303 im oberen Bereich des Containers befestigt ist. Es ist zu erkennen, dass eine vom Untergrund her ausgelöste Detonation keine Kräfte auf die Bodenfläche 301 übertragen kann, da diese Fläche im oberen Bereich des Containers 300 aufgehängt ist.

Anstelle der Seile 303 kann auch eine federnde Aufhängung verwendet werden, also etwa eine Kombination von Kette und Zugfeder.

## Patentansprüche

1. Mit Sitzgelegenheiten ausgestattetes Militärpersonenfahrzeug oder -aufenthaltsraum in der Form eines Frachtcontainers für den Einsatz in Gebieten, in denen Minen oder dgl. zu befürchten sind, wobei Wände, Boden und Decke mit Mitteln ausgestattet sind, die der Druckwelle einer Detonation durch Formänderungsarbeit Energie entziehen, **dadurch gekennzeichnet, dass** oberhalb des Boden des Containers (300) eine Aufstellfläche (301) für die Sitze (302) vorgesehen ist, die ihrerseits lediglich über Seile oder Ketten (303) an der Decke des Containers aufgehängt ist.

## Claims

1. Military passenger vehicle or rest room equipped with seats in form of a freight container for use in areas, in which the presence of mines or such like is to be feared, wherein walls, floor and ceiling are equipped with means withdrawing energy arising from the pressure wave of a detonation by means of deformation work, **characterised in that** above the floor of the container (300) a set up surface (301) for the seats (302) is provided, which in turn is only suspended from the ceiling of the container through ropes or chains (303).

## Revendications

1. Véhicule pour le transport de militaires ou compartiment de séjour pour militaires sous forme d'un conteneur à fret équipé de sièges, qui est destiné à être utilisé dans des zones susceptibles de contenir des mines ou d'objet similaires et dont les parois, le fond et le plafond sont pourvus de moyens qui retirent, en raison d'un travail de déformation, de l'énergie de l'onde de choc provoqué par la déflagration, **caractérisé en ce que** au dessus du fond (300) du conteneur est prévue une surface d'aménagement (301) pour les sièges, qui est suspendue au plafond uniquement par des cordes ou des câbles (303).
